# EUROPEAN PATENT APPLICATION

(11) **EP 4 459 883 A1**
(43) Date of publication of application: **06.11.2024**
(21) Application number: 22914011.6
(22) Date of filing: 01.12.2022
(51) Int. Cl.: H04B 3/54

(54) **COMMUNICATION INFORMATION SENDING METHOD, COMMUNICATION HOST APPARATUS AND TWO-WIRE SYSTEM POWER SUPPLY COMMUNICATION SYSTEM**

(30) Priority: 30.12.2021 CN 202111658002
(71) Applicant: Heuvan (Chongqing) Sci-tech Co., Ltd., Chongqing 401147 (CN)
(72) Inventor: LIU, Yaowen, Chongqing 401147 (CN); SHA, Yufeng, Chongqing 401147 (CN); HE, Jinli, Chongqing 401147 (CN)
(74) Representative: Tiburzi, Andrea
(86) International application number: PCT/CN2022/136018
(87) International publication number: WO 2023/124756

(57) **Abstract**

The present application relates to a communication information sending method, a communication host apparatus and a two-wire system power supply communication system, in the technical field of communications. The method comprises: transmitting a first voltage signal and a second voltage signal in a time division and direction division manner on a two-wire system line, the first voltage signal being used to transmit communication data, and the second voltage signal being used to transmit power; when communication data is transmitted, transmitting the communication data by means of changing the waveform of the first voltage signal on the two-wire system line, the first voltage signal and the second voltage signal being voltage signals in different directions, and the first voltage signal and the second voltage signal alternating according to a preset time period. The first voltage signal and the second voltage signal on the two-wire system are transmitted independently of each other and without interfering with each other, so that the present method has advantages such as simple operation, simplified wiring, strong power supply capability, strong anti-interference ability, and strong communication reliability.

## Description

### CROSS-REFERENCE TO RELATED APPLICATION

The present invention claims priority to Chinese patent Application No. 202111658002.6, filed with the Chinese Patent Office on December 30, 2021, entitled "COMMUNICATION INFORMATION SENDING METHOD, COMMUNICATION HOST APPARATUS AND TWO-WIRE SYSTEM POWER SUPPLY COMMUNICATION SYSTEM," the entire contents of which are incorporated herein by reference.

### TECHNICAL FIELD

The present invention belongs to the technical field of communication, and specifically relates to a communication information sending method (communication information transmission method), a communication host apparatus (communication host device), and a two-wire system power supply communication system (two-wire power supply communication system, i.e., a power supply and communication system with two-wire system).

### BACKGROUND ART

Currently, two-wire system solutions of combining a power supply line and a signal line are mainly based on carrier communication and DC pulse communication.

The principle based on the carrier communication is to communicate with apparatus based on high-frequency carriers when supplying power by AC (alternating current) or DC (direct current) power supplies, so as to realize the multiplexing of power and signals, wherein a representation is Power Line Communication (PLC). The advantages are high transmission power, and high communication rate; and disadvantages are that the circuit is complex and the cost is high, signal propagation has no direction, and anti-interference performance is poor, so that it is needed to provide an isolator to prevent instability or other signals from unexpected entry, so as to avoid affecting the PLC communication.

The principle based on the DC pulse communication is to overlap levels of DC power supply with high and low both-way communication, so as to realize the multiplexing of power and signals, wherein a representation is Digital Addressable Lighting Interface (DALI) communication. The advantages are simple circuit and good anti-interference performance; and the disadvantage is poorer power supply capacity, wherein a maximum supply current of DALI is 250mA, and a power output is weaker.

The above two communication solutions are not very ideal. Therefore, a method with a simple circuit, good anti-interference performance, strong power supply capacity, and high communication rate is needed to realize the power supply communication.

### SUMMARY

The present invention provides a communication information sending method, a communication host apparatus, and a two-wire system power supply communication system to provide a power supply communication method with a simple circuit, a good anti-interference performance, a strong power supply capacity, and a high communication rate.

The embodiments of the present invention are realized in the following ways.

Some embodiments of the present invention provide a communication information sending method, including: transmitting a first voltage signal and a second voltage signal in different time and directions on a two-wire system circuit, wherein the first voltage signal is configured to transmit communication data, and the second voltage signal is configured to transmit electric power, wherein when transmitting the communication data, a communication party transmits the communication data by changing a waveform of the first voltage signal, wherein the first voltage signal and the second voltage signal are voltage signals in different directions, and the first voltage signal and the second voltage signal alternate according to a preset time period. In some embodiments of the present invention, the communication data can be transmitted by changing the voltage waveform of the first voltage signal, which does not need to apply additional communication cables, so as to provide a simple circuit structure, and the layout cost is low. Meanwhile, the corresponding first voltage signal when the two-wire system circuit transmits data and the corresponding second voltage signal when the two-wire system circuit transmits the electric power are voltage signals in a different time and directions. The data is separated from the electric power, and the voltage signals are in different directions, so that the data has strong anti-interference performance and strong communication reliability, and it does not need to add additional isolators.

In conjunction with one possible embodiment in some embodiments of the present invention, the communication information sending method can be executed by a communication host apparatus, wherein the communication host apparatus is configured to generate the first voltage signal and the second voltage signal.

In conjunction with one possible embodiment in some embodiments of the present invention, when transmitting downlink communication data, the communication party can transmit the downlink communication data by changing the waveform of the first voltage signal according to a code corresponding to the downlink communication data.

Some other embodiments of the present invention further provide a communication host apparatus, including: a host module, a host waveform change module, and a host control module, wherein the host module is configured to connect to the two-wire system circuit for generating the first voltage signal transmitting the communication data and the second voltage signal transmitting the electric power, wherein the first voltage signal and the second voltage signal are voltage signals in different directions, and the first voltage signal and the second voltage signal alternate according to the preset time period; the host waveform change module is configured to connect to the host module, wherein when the two-wire system circuit is configured to send the downlink communication data, the host waveform change module is configured to transmit the downlink communication data by changing the waveform of the first voltage signal; and the host control module is connected to the host waveform change module, and the host control module is configured to control the host waveform change module to change the waveform of the first voltage signal to transmit the downlink communication data according to code information corresponding to the downlink communication data. In some other embodiments of the present invention, the communication host apparatus of the above structure can be adopted to realize the inventive purpose, so as to provide a power supply communication method with a simple circuit, good anti-interference performance, strong power supply capacity, and high communication rate.

In combination with one possible embodiment in some other embodiments of the present invention, the first voltage signal and the second voltage signal can both be DC signals.

In combination with one possible embodiment in some other embodiments of the present invention, the host waveform change module can include at least two components capable of circuit switching and voltage regulation branches corresponding to the components.

In conjunction with one possible embodiment in some other embodiments of the present invention, the host module can include: a first power source, a second power source, and a voltage signal switching module, wherein the first power source is configured to generate the first voltage signal transmitting the communication data; the second power source is configured to generate the second voltage signal transmitting the electric power; and the voltage signal switching module is configured to switch the first power source and the second power source under control of the host control module, so that the first voltage signal and the second voltage signal in different directions alternate according to the preset time period. In some other embodiments of the present invention, the voltage signal switching module can be configured to switch the first power source and the second power source, so as to generate the first voltage signal transmitting the communication data or the second voltage signal transmitting the electric power.

In conjunction with one possible embodiment in some embodiments of the present invention, it can further include: a host detection module, wherein the host detection module is connected to the host control module; the host detection module is configured to detect the waveform of the first voltage signal, and transmit detection data to the host control module; and the host control module is further configured to decode uplink communication data sent by a communication slave apparatus according to the detection data detected by the host detection module, so as to communicate with the communication slave apparatus. In some other embodiments of the present invention, the host detection module is additionally added, so that the communication host apparatus is further provided with a function of receiving the uplink communication data sent by the communication slave apparatus, thereby realizing the communication with the communication slave apparatus.

The other embodiments of the present invention further provide a two-wire system power supply communication system, including: a host end, including a communication host apparatus, wherein the host end is configured to generate the first voltage signal required for transmitting the communication data and the second voltage signal transmitting electric power, wherein the first voltage signal and the second voltage signal are voltage signals in different directions, and the first voltage signal and the second voltage signal alternate according to the preset time period, when transmitting the downlink communication data, the host end transmits the downlink communication data by changing the waveform of the first voltage signal according to the code corresponding to the downlink communication data; and a slave end, including at least one communication slave apparatus, wherein the slave end is configured to acquire the second voltage signal and supply power to an electrical apparatus, and receive and decode the downlink communication data on the first voltage signal when the two-wire system circuit transmits the first voltage signal, so as to communicate with the host end.

In conjunction with one possible embodiment in other embodiments of the present invention, the host end can include: the host module, configured to connect to the two-wire system circuit, wherein the host module is configured to generate the first voltage signal transmitting the communication data and the second voltage signal transmitting the electric power, wherein the first voltage signal and the second voltage signal are voltage signals in different directions, and the first voltage signal and the second voltage signal alternate according to the preset time period; the host waveform change module, configured to connect to the host module, wherein when the two-wire system circuit is configured to send the downlink communication data, the host waveform change module is configured to transmit the downlink communication data by changing the waveform of the first voltage signal; and the host control module, connected to the host waveform change module, wherein the host control module is configured to control the host waveform change module to change the waveform of the first voltage signal to transmit the downlink communication data according to code information corresponding to the downlink communication data.

In conjunction with one possible embodiment in other embodiments of the present invention, the host waveform change module can include at least two components capable of circuit switching and the voltage regulation branches corresponding to the components.

In conjunction with one possible embodiment in other embodiments of the present invention, the host module can include: the first power source, configured to generate the first voltage signal transmitting the communication data; the second power source, configured to generate the second voltage signal transmitting the electric power; and the voltage signal switching module, configured to switch the first power source and the second power source under the control of the host control module, so that the first voltage signal and the second voltage signal in different directions alternate according to the preset time period.

In conjunction with one possible embodiment in other embodiments of the present invention, the slave end can include: a separation circuit, connected to the two-wire system circuit, wherein the separation circuit is configured to separate the first voltage signal from the second voltage signal; a slave detection module, configured to detect the waveform of the first voltage signal, and output the detection data; and a slave control module, connected to the slave detection module, wherein the slave control module is configured to decode the downlink communication data sent by the host end according to the detection data detected by the slave detection module, so as to communicate with the host end.

In conjunction with one possible embodiment in other embodiments of the present invention, the slave end can further include: a power conversion module, wherein the separation circuit is connected to the electrical apparatus by the power conversion module, and the power conversion module is configured to improve or reduce a voltage of the voltage signal on the two-wire system circuit, so as to adapt to a power requirement of the electrical apparatus.

In conjunction with one possible embodiment in other embodiments of the present invention, the slave end can further include: a slave waveform change module, connected to the two-wire system circuit, wherein the slave waveform change module is configured send the uplink communication data under control of the slave control module by changing the waveform of the first voltage signal; and the slave control module, further configured to control the slave waveform change module to change the waveform of the first voltage signal to send the uplink communication data according to code information corresponding to the uplink communication data; and accordingly, the host end can further include: the host detection module, connected to the host control module, wherein the host detection module is configured to detect the waveform of the first voltage signal, and transmit detection data to the host control module; and the host control module is configured to decode the uplink communication data sent by the slave end according to the detection data detected by the host detection module, so as to communicate with the slave end.

In conjunction with one possible embodiment in other embodiments of the present invention, the slave end can further be configured to send and receive the communication data with other slave ends by the two-wire system circuit; and the other slave ends can be configured to send and receive the communication data with the slave end by the two-wire system circuit, so as to communicate between slaves.

Other features and advantages of the present invention will be illustrated in the subsequent specification, and partial will become apparent from the specification, or will be understood by implementing embodiments of the present invention. The purposes and other advantages of the present invention may be realized and obtained by structures specifically indicated in the written specification and in the drawings.

### BRIEF DESCRIPTION OF DRAWINGS

In order to more clearly illustrate the technical solutions in the embodiments of the present invention or related technology, the following will briefly introduce the drawings to be used in the embodiments. It is obvious that the drawings in the following description are only some embodiments of the present invention, and for persons of ordinary skill in the art, other drawings can be obtained based on these drawings without inventive efforts. The foregoing and other objects, features, and advantages of the present invention will be clearer by the drawings. The same reference numbers in all drawings indicate the same parts. The drawings are not deliberately scaled to the actual size, and are intended to show the main point of the present invention.
FIG. 1 shows a schematic structure diagram of a communication host apparatus provided by embodiments of the present invention.
FIG. 2 shows a schematic waveform diagram of a power supply waveform and a communication waveform provided by embodiments of the present invention.
FIG. 3 shows a schematic waveform diagram of another power supply waveform and another communication waveform provided by embodiments of the present invention.
FIG. 4 shows a schematic waveform diagram of another power supply waveform and another communication waveform provided by embodiments of the present invention.
FIG. 5 shows a schematic waveform diagram of another power supply waveform and another communication waveform provided by embodiments of the present invention.
FIG. 6 shows a schematic circuit diagram of a voltage signal switching module provided by embodiments of the present invention.
FIG. 7 shows a schematic circuit diagram of a host waveform change module provided by embodiments of the present invention.
FIG. 8 shows a schematic circuit diagram of another host waveform change module provided by embodiments of the present invention.
FIG. 9 shows a schematic circuit diagram of another host waveform change module provided by embodiments of the present invention.
FIG. 10 shows a schematic circuit diagram of a waveform change module connecting to a voltage signal switching module provided by embodiments of the present invention.
FIG. 11 shows a schematic structure diagram of another communication host apparatu provided by embodiments of the present invention.
FIG. 12 shows a schematic structure diagram of a two-wire system power supply communication system provided by embodiments of the present invention.
FIG. 13 shows a schematic structure diagram of a communication slave apparatus provided by embodiments of the present invention.
FIG. 14 shows a schematic diagram of a separation circuit provided by embodiments of the present invention.
FIG. 15 shows a schematic circuit diagram of a separation circuit connecting to a slave detection module provided by embodiments of the present invention.
FIG. 16 shows a schematic circuit diagram of another separation circuit connecting to another slave detection module provided by embodiments of the present invention.
FIG. 17 shows a schematic circuit diagram of another separation circuit connecting to another slave detection module provided by embodiments of the present invention.
FIG. 18 shows a schematic circuit diagram of another separation circuit connecting to another slave detection module provided by embodiments of the present invention.
FIG. 19 shows a schematic circuit diagram of a slave detection module provided by embodiments of the present invention.
FIG. 20 shows a schematic circuit diagram of another separation circuit connecting to another slave detection module provided by embodiments of the present invention.
FIG. 21 shows a schematic circuit diagram of another separation circuit connecting to another slave detection module provided by embodiments of the present invention.
FIG. 22 shows a schematic structure diagram of another communication slave apparatu provided by embodiments of the present invention.

### DETAILED DESCRIPTION OF EMBODIMENTS

The technical solutions in the embodiments of the present invention will be described below in conjunction with the drawings in the embodiments of the present invention.

It should be noted that similar symbols and letters denote similar items in the following drawings, so that once an item is defined in a drawing, no further definition or explanation is required in the subsequent drawings. At the same time, relational terms such as "first", "second", etc., in the description of the present invention are only used to distinguish one entity or operation from another entity or operation, and do not necessarily require or imply the existence of any such actual relationship or order between these entities or operations. Furthermore, the terms "include", "comprise", or any other variant thereof are intended to cover a non-exclusive inclusion, so that a process, method, item, or device comprising a set of components includes not only those components, but also other components that are not explicitly listed, or components are inherent to this process, method, item, or device. Without further limitation, the fact that a component is defined by the phrase "including a ......" does not exclude the existence of other identical components in the process, method, item, or device including the component.

Furthermore, the term "and/or" in the present invention is merely an association relationship for describing associated objects, and represents three relationships can exist, e.g., A and/or B can represent three cases: A alone, both A and B, and B alone.

In view of shortcomings existing in the two-wire system communication solution of data transmission and power supply multiplexing in the prior art, the embodiments of the present invention provide a brand new communication host apparatus, which can realize power supply by a positive voltage signal and communication by a negative voltage signal (which can change the direction) based on the form of DC power supply, or AC to DC. It has advantages of simple circuit structure, low cost of layout, and high reliability of communication, and can be used for devices such as DC lighting, sensor probes, and control panels, etc.

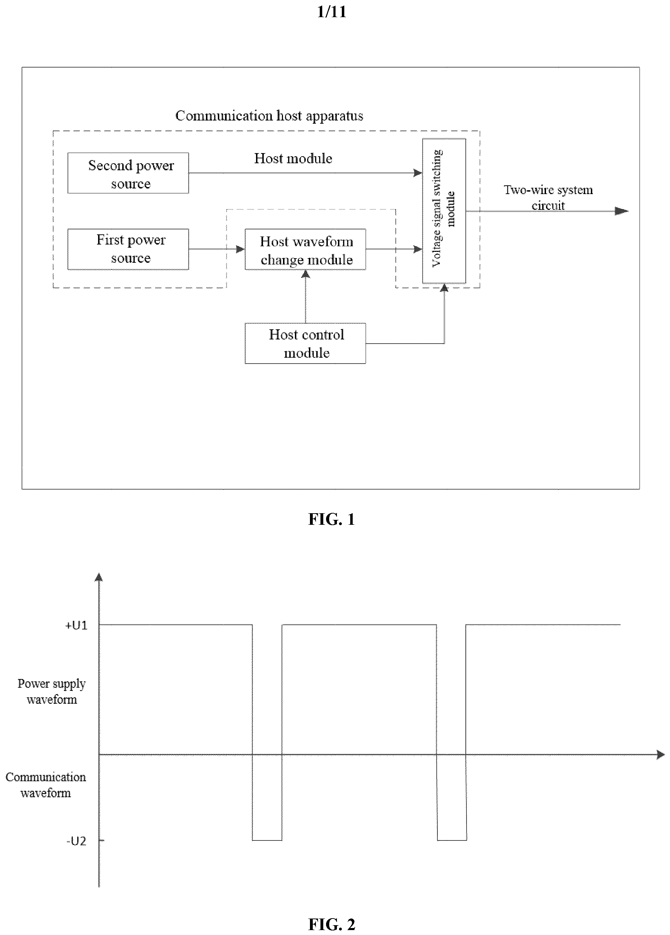

As described below in conjunction with FIG. 1, the communication host apparatus can include a host waveform change module, a host control module, and a host module, wherein the host control module is separately connected to the host waveform change module and the host module.

The host module is connected to the two-wire system circuit for generating a first voltage signal transmitting communication data and a second voltage signal transmitting electric power. Optionally, the host module can include a first power source, a second power source, and a voltage signal switching module.

The first power source is configured to generate the first voltage signal transmitting the communication data, and the second power source is configured to generate the second voltage signal transmitting the electric power. The voltage signal switching module is configured to switch the first power source and the second power source under control of the host control module, and selectively act the first power source or the second power source on the two-wire system circuit, so that the first voltage signal and the second voltage signal alternate according to a preset time period, so as to form bidirectional voltage signals.

The two-wire system circuit has different voltages when transmitting data and transmitting electric power, wherein the two-wire system circuit is used to transmit the first voltage signal transmitting communication data when the first power source (e.g., VCC1) acts on the two-wire system circuit, and the two-wire system circuit is used to transmit the second voltage signal transmitting electric power when the second power source (e.g., VCC2) acts on the two-wire system circuit. Assuming that one of the lines in the two-wire system circuit is W and the other line is C, the two-wire system circuit is used to transmit the second voltage signal transmitting electric power when W is connected to VCC2 and C is grounded; and the two-wire system circuit is used to transmit the first voltage signal transmitting communication data when C is connected to VCC1 and W is grounded. Of course, vice versa.

The first voltage signal and the second voltage signal are voltage signals in different directions, and the first voltage signal and the second voltage signal alternate according to the preset time period, so as to form the bidirectional voltage signals. For example, the positive voltage signal is used to transmit the electric power, and the negative voltage signal is used to transmit the communication data, or of course the directions can be exchanged.

By separating the electric power transmission and the data transmission, and adopting voltage signals in different directions, it improves the power supply capacity and the anti-interference performance of data. It does not need additional isolators, so that the current can reach more than 10A, and at the same time a higher rate of data transmission can be realized.

In order to ensure the stability of the power supply, a duty cycle of the first voltage signal to the entire bidirectional voltage signal can be smaller than a duty cycle of the second voltage signal to the entire bidirectional voltage signal. In one embodiment, for example, the duty cycle of the first voltage signal to the entire bidirectional voltage signal is not larger than 20%, or the duty cycle of the second voltage signal to the entire bidirectional voltage signal is not smaller than 80%. It should be noted that this is only an example, and therefore it should not be understood as a limitation of the present invention.

Optionally, the first voltage signal and the second voltage signal can both be DC signals, for example, the first voltage signal can be a pulse DC signal, and the second voltage signal can be a pulse DC signal or a fluctuating DC signal (the waveform is wavy). Since the solution is powered by the DC power source, the size of the voltage is not limited, so that a transmission of a high-power work signal or a high-power communication signal can be realized.

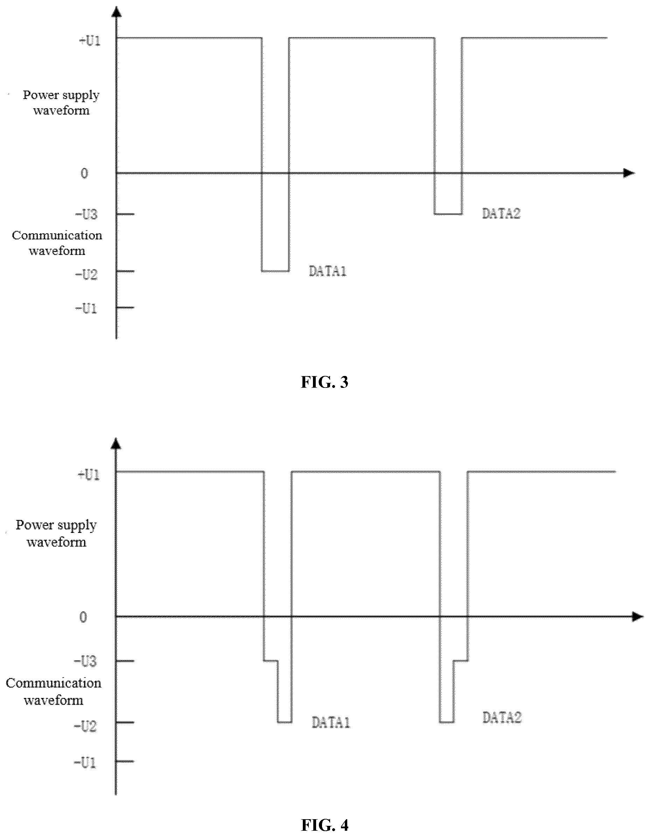

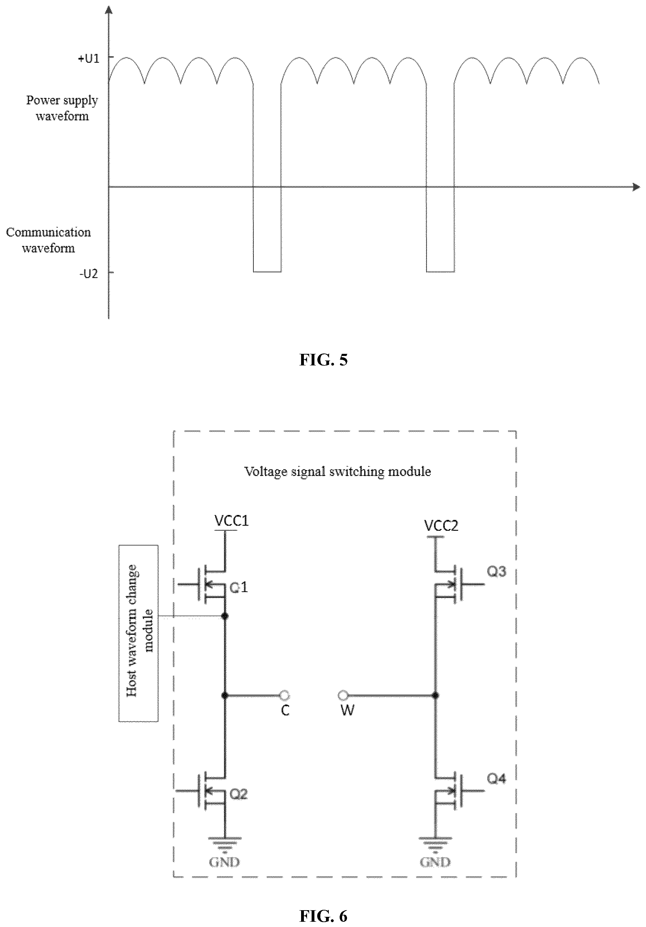

The waveform corresponding to the first voltage signal is the communication waveform, and the waveform corresponding to the second voltage signal is the power supply waveform. In one embodiment, schematic diagrams of the power supply waveform and the communication waveform are shown in FIG. 2, FIG. 3, and FIG. 4. It can obtain different types of communication waveforms as shown in FIG. 2, FIG. 3, and FIG. 4 by changing the voltage waveform of the first voltage signal on the two-wire system circuit by the host waveform change module, i.e., by changing the voltage size of the first voltage signal on the two-wire system circuit. The power supply waveforms shown in FIG. 2 to FIG. 4 are all pulse DC signals. Additionally, it can be the fluctuating DC signal, and the waveform is wavy. The schematic diagram is shown schematically in FIG. 5. The waveform shown in FIG. 5 is different from that shown in FIG. 2 in that the power supply waveform is wavy. Additionally, the power supply waveforms in FIG. 3 and FIG. 4 can both be replaced with the power supply waveform in FIG. 5.

In one embodiment, the communication waveform shown in FIG. 2 can be the waveform when no data is sent (it can also be viewed as always sending the same code information such as 1 or 0), and the waveforms shown in FIG. 3 and FIG. 4 are the waveforms when data is sent. DAT1 in FIG. 3 and FIG. 4 can correspond to code 1, and DAT2 can correspond to code 0 (or vice versa). The communication waveform shown in FIG. 3 can only send the same type (0 or 1) of data at the same moment (moment t2), and the communication waveform shown in FIG. 4 can send only the same type (0 or 1) of data at the same moment, or can send 2 types of data (such as 1 and 0). If 2 types of data are sent, it can be that U3 corresponds to code 1 and U2 corresponds to code 0 (or vice versa), and if 1 type of data is sent, it can be that U3 corresponds to code 1 and U2 does not send data (or vice versa). Alternatively, it can be that the waveform with a notch facing left corresponds to code 1, and the communication waveform with a notch facing right corresponds to code 0 (or vice versa).

The communication is realized by changing the voltage waveform of the first voltage signal, i.e., by changing the size of the voltage waveform, so that the communication can be realized without additionally introducing other techniques (e.g., carrier wave) and adopting a wireless communication module, and the code values corresponding to different voltages can be defined according to requirements, and is not limited by scenarios, e.g., 0-10V can correspond to the code 0, and 20V-30V can correspond to the code 1, which makes the solution very flexible.

It should be noted that the absolute values of U1, U2, and U3 in the above are not limited, wherein U1 >U2 >U3; and DATA1 and DATA2 can transmit 1 or more bits of data.

In one embodiment, the first power source can include a constant current module (which can be a constant current resistance), so that the data transmission is not affected by voltage fluctuations. Since the first power source includes the constant current module, i.e., the signal end is a constant current source. The signal transmission is not affected by fluctuating fluctuations of the power supply voltage, so that the signal transmission is stable.

The voltage signal switching module can be realized in multiple ways. Optionally, the voltage signal switching module can include a controllable switching device, wherein a common end is connected to the two-wire system circuit; one contact (e.g., a normally-open contact) is connected to the first power source; the other contact (e.g., a normally-closed contact) is used to connect to the second power source; and a control end is connected to the host control module. Under the control of the host control module, the common end is selectively connected to the normally-open contact or the normally-closed contact, so that the first power source and the second power source of the host module are switched, and the first voltage signal and the second voltage signal alternate according to the preset time period, thereby forming the bidirectional voltage signal. Additionally, the voltage signal switching module can further be a relay, and the principle is similar to the controllable switching device described above.

In another embodiment, the voltage signal switching module can be composed of a plurality of switching tubes, e.g., in one embodiment, a principle diagram of the voltage signal switching module is shown in FIG. 6. It includes 4 switching tubes, which are respectively Q1, Q2, Q3 and Q4. When Q2 and Q3 are on, Q1 and Q4 are off, the second voltage signal transmitting the electric power is between WC; and when Q2 and Q3 are off, Q1 and Q4 are on, the first voltage signal transmitting the communication data is transmitted between WC. If it needs to send the communication data, the waveform can be changed by controlling the waveform change module. It should be noted that the switching tubes in the schematic diagram shown in FIG. 6 are MOS tubes, wherein the MOS tube can be replaced by a triode, a relay, or other components or devices with similar function.

The host control module is configured to control the host waveform change module to change the voltage waveform of the first voltage signal to transmit the downlink communication data according to the code information (composed of two-wire system 0 and 1) corresponding to the downlink communication data when the downlink communication data is transmitted to the slave end on the two-wire system circuit; and to control the host module to alternately generate the first voltage signal transmitting the communication data and the second voltage signal transmitting the electric power according to the preset time period.

The host waveform change module is configured to connect to the host module, wherein one end is connected to the first power source, and the other end is connected to the voltage signal switching module. When transmitting the downlink communication data, the host waveform change module is configured to transmit the downlink communication data by changing the voltage waveform of the first voltage signal output from the first power source. The host waveform change module can transmit downlink communication data by changing the voltage waveform of the first voltage signal under the control of the host control module. Since the voltage signal switching module will act on the first voltage signal on the two-wire system circuit under the action of the host control module when transmitting the downlink communication data, the voltage waveform of the first voltage signal output from the first power source can be used to change the waveform of the first voltage signal on the two-wire system circuit.

The host waveform change module can further be connected to the two-wire system circuit at one end, and connected to the host module at the other end. When transmitting the downlink communication data, the host waveform change module is configured to transmit the downlink communication data by changing the voltage waveform of the first voltage signal on the two-wire system circuit.

The host waveform change module can include at least 2 triodes and the corresponding voltage regulation branches, wherein different voltage regulation branches correspond to different voltages. The bases of the triodes are connected to different I/O interfaces of the host control module; the first ends (e.g., collectors) of the triodes are connected to the first power source via the voltage regulation branches; and the second ends (e.g., emitters) of the triodes are connected to one of the two-wire system circuits, such as C. The triode can be replaced by any component or device capable of circuit switching, such as MOS tube, relay, etc. The voltage regulation branch can be realized by a voltage regulator tube, voltage regulator chip, voltage regulator circuit, resistance, etc.

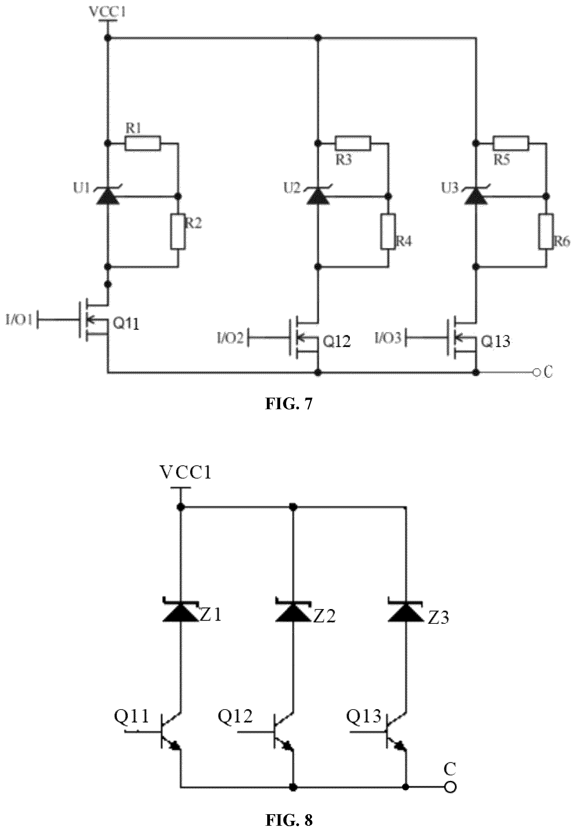

For example, in one embodiment, the circuit diagram of the host waveform change module is shown in FIG. 7, and the voltage regulation branch is consisted of the voltage regulator circuit. The grid end of transistor Q11, the grid end of transistor Q 12, and the grid end of transistor Q13 are used to connect to the control module; one voltage regulation branch is consisted of the voltage regulator diode U1, the resistance R1, and the resistance R2; another voltage regulation branch is consisted of the voltage regulator diode U2, the resistance R3, and the resistance R4; and another voltage regulation branch is consisted of the voltage regulator diode U3, the resistance R4, and the resistance R5. The VCC1 is the first power source for providing the first voltage signal, and the source of transistor Q11, the source of transistor Q12, and the source of transistor Q13 are used to connect one of the two-wire system circuits, that is, the point C in the diagram is used to connect one of the two-wire system circuits.

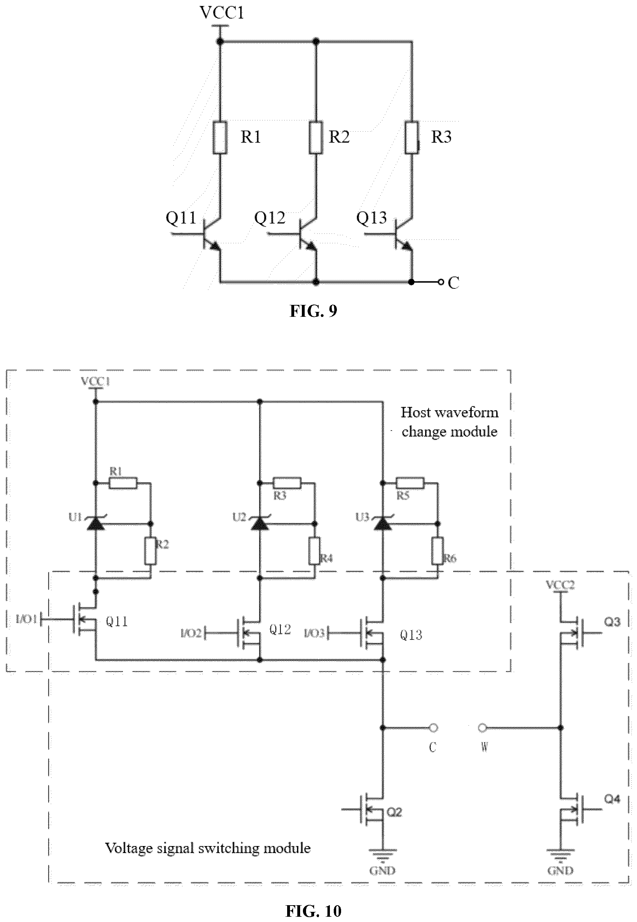

For another example, in one embodiment, circuit diagrams of the host waveform change module are shown in FIG. 8 and FIG. 9, wherein the bases of triodes Q11, Q12, and Q13 in FIG. 8 and FIG. 9 are all connected to the control module, and the point C is used to connect to one of the two-wire system circuit. Additionally, the triodes Q11, Q12, and Q13 can be replaced by relays.

It should be noted that the host waveform change module can be realized by multiple types of circuits, and components or devices capable of circuit switching are available, which are not limited to the schematic diagrams shown in FIG. 7, FIG. 8, and FIG. 9 of the above examples.

In one embodiment, a schematic diagram of the host waveform change module connecting to the voltage signal switching module is shown in FIG. 10. The host waveform change module and the voltage signal switching module share switching tubes Q11, Q12, Q13. When Q2 and Q3 in FIG. 10 are on, and the other transistors are off, the second voltage signal for power supply is between WC; and when Q2 and Q3 are off, and Q11 (Q12 or Q13) and Q4 are on, the first voltage signal for data transmission is between WC. The waveform can be changed by switching Q11, Q12, and Q13, so as to send data.

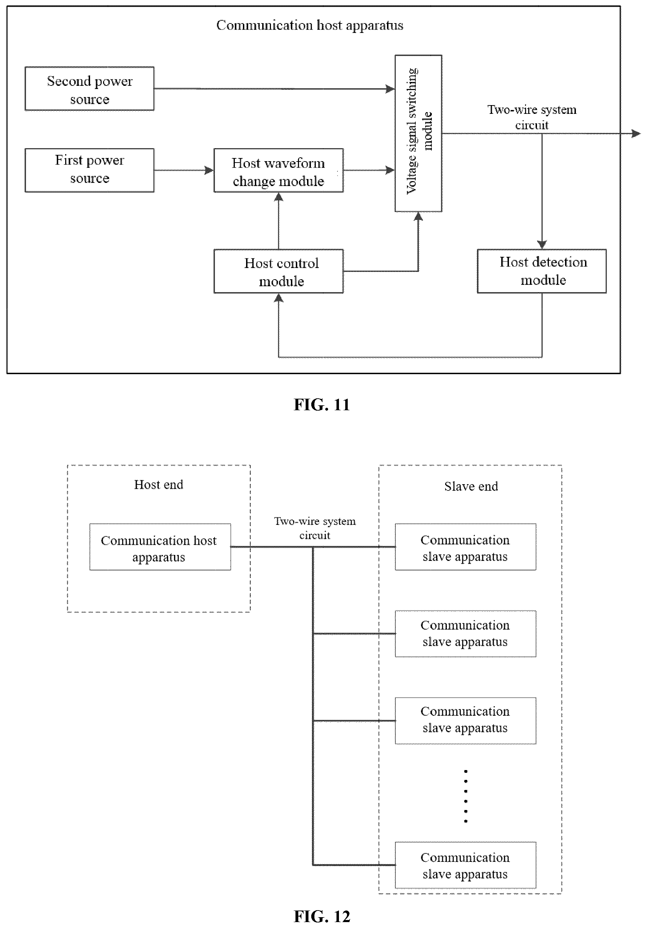

The communication host apparatus can send the downlink communication data to the communication slave apparatus, and can receive uplink communication data sent by the communication host apparatus. In this embodiment, the communication host apparatus further includes a host detection module, wherein the host detection module is connected to the host control module, a schematic diagram of which is shown in FIG. 11. The host detection module is configured to detect the first voltage signal on the two-wire system circuit, and transmit the detected first voltage signal to the host control module. The host control module is further configured to decode the uplink communication data sent from the slave end according to the first voltage signal detected by the host detection module, so as to communicate with the communication slave apparatus.

Different voltages correspond to different code information, e.g., the voltage U3 described above can correspond to the code 0, and the voltage U2 can correspond to the code 1. Therefore, it can decode the communication data sent by the opposite end according to the size of the detected voltage signal after detecting the size of the first voltage signal on the two-wire system circuit. It is noted that the communication host apparatus cannot include the host detection module if the communication host apparatus is only configured to send communication data to the opposite end, and the communication host apparatus needs to include the host detection module if the communication host apparatus is further configured to receive communication data sent from the opposite end.

The host control module can include a controller, wherein the controller can be an integrated circuit chip with signal processing capability. The foregoing controller can be a general purpose processor, including a Central Processing Unit (CPU), a Network Processor (NP), etc., it can also be a Digital Signal Processor (DSP), an Application Specific Integrated Circuit (ASIC), a Field Programmable Gate Array (FPGA), or other programmable logic components, discrete gates or transistor logic components, and discrete hardware components, which can be used to realize or execute the methods and steps disclosed in embodiments of the present invention, wherein the general purpose processor can be a microprocessor, or the controller can be any conventional processor, etc.

Based on the same inventive concept, the embodiments of the present invention further provide a two-wire system power supply communication system, including a host end and a slave end, wherein the host end is connected to the slave end by the two-wire system circuit, and the schematic diagram is shown in FIG. 12.

The host end includes a communication host apparatus for generating the first voltage signal required for transmitting the communication data and the second voltage signal transmitting the electric power. The first voltage signal and the second voltage signal are voltage signals in different directions, and the first voltage signal and the second voltage signal alternate according to the preset time period, so as to form the bidirectional voltage signals. When transmitting the downlink communication data, the host end transmits the downlink communication data by changing the voltage waveform of the first voltage signal according to the code corresponding to the downlink communication data.

The slave end includes at least one communication slave apparatus for acquiring the second voltage signal and supplying power to the electrical apparatus, and receiving and decoding the downlink communication data on the first voltage signal when the two-wire system circuit transmits the first voltage signal, so as to communicate with the host end.

In one embodiment, the host end can be the communication host apparatus shown in FIG. 1 above, when the host end includes: the host waveform change module, the host control module, and the host module, wherein the host module includes the first power source, the second power source, and the voltage signal switching module. The specific description of contents of this part please refer to the description of the communication host apparatus part above.

In another embodiment, the host end can further be configured to detect the size of the first voltage signal on the two-wire system circuit, and decode the uplink communication data sent from the slave end according to the size of the detected first voltage signal, so as to communicate with the slave end. In the embodiment, the host end can be the communication host apparatus shown in FIG. 11 above, when the host end further includes the host detection module.

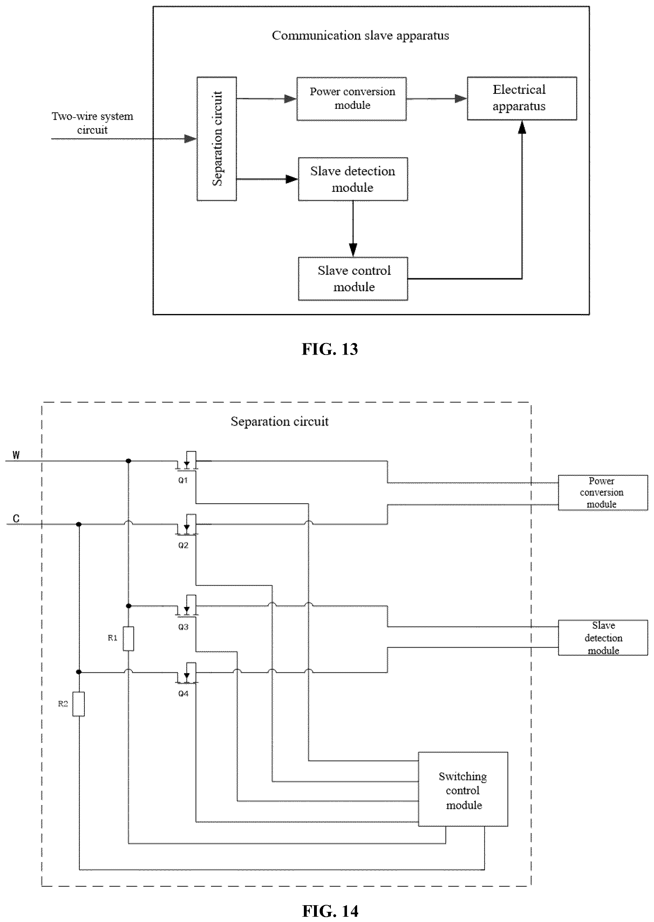

In one embodiment, the slave end can include: the separation circuit, the slave detection module, and the slave control module, and the schematic diagram is shown in FIG. 13.

The separation circuit is connected to the two-wire system circuit for separating the first voltage signal from the second voltage signal on the two-wire system circuit, wherein the separated second voltage signal is transmitted to the electrical apparatus for power supply, and the separated first voltage signal is sent to the slave detection module. Additionally, the slave end can further include the power conversion module connecting to the separation circuit, which is used to change the voltage of the second voltage signal separated by the separation circuit to a voltage corresponding to the electrical apparatus.

The slave detection module is configured to detect the waveform of the first voltage signal, and transmit detection data to the slave control module.

The slave control module is connected to the slave detection module, wherein the slave control module is configured to decode the downlink communication data sent by the host end according to the detection data detected by the slave detection module, so as to communicate with the host end, and to control the electrical apparatus based on the downlink communication data sent from the host end. For example, assuming that the electrical apparatus is a smart lighting lamp, when controlling the electrical apparatus, the switch, brightness (dimming), color temperature (cool, warm, etc.), and color (e.g., green, yellow, red (ruddy), white, black, etc.) of the lighting lamp can be adjusted according to the downlink communication data, such that the grouping of the smart lighting lamp can also be realized.

The separation circuit can be realized in multiple ways. Optionally, the separation circuit includes the controllable switching device and the switching control module, wherein the common end is connected to the two-wire system circuit; one contact (e.g., a normally-open contact) is connected to the electrical apparatus by the power conversion module; the other contact (e.g., a normally-closed contact) is connected to the slave detection module, and the control end is connected to the switching control module. The switching control module determines the voltage signal transmitted on the circuits by detecting the voltage difference between two circuits of the two-wire system, and in turn controls the common end to selectively communicate with the normally-open contact or the normally-closed contact. When the two-wire system circuit is used for the second voltage signal transmitting the electric power, a contact connecting to the power conversion module is turned on; and when the two-wire system circuit is used for the first voltage signal transmitting the communication data, a contact connecting to the slave detection module is turned on, so that the first voltage signal is separated from the second voltage signal.

In another embodiment, the separation circuit can be consisted of a plurality of switching tubes, e.g., in one embodiment, a principle diagram of the separation circuit is shown in FIG. 14. It includes 4 switching tubes and the switching control module, wherein the switching tubes are Q1, Q2, Q3, and Q4. The voltage signal transmitted on the circuit is determined according to the voltage difference. When the voltage of the line W is larger than the voltage of the line C, the two-wire system circuit transmits the second voltage signal transmitting the electric power, at which time Q1 and Q2 are on, and Q3 and Q4 are off; and when the voltage of the line W is smaller than the voltage of the line C, the two-wire system circuit transmits the first voltage signal transmitting the communication data, at which time Q1 and Q2 are off, sand Q3 and Q4 are on. In this way, the first voltage signal is separated from the second voltage signal. It should be noted that the switching tubes in the schematic diagram shown in FIG. 14 are MOS tubes, wherein the MOS tube can be replaced by the triode, relay, or other components or devices with similar functions.

Since the two-wire system power supply communication system in the embodiment of the present invention adopts the two-wire system, the host end is provided with two output ports, which are assumed to be OUT1 and OUT2 respectively; and the slave end is also provided with two input ports, which are assumed to be IN1 and IN2 respectively.

Specifically, when the two-wire system connection method between the host end and the slave end is known (e.g., it has been marked, set, or described before delivery), e.g., the ports OUT1 and OUT2 of the host end are connected to the ports IN1 and IN2 of the slave end respectively. In another embodiment, at this time, the separation circuit includes four diodes, wherein the first voltage signal and the second voltage signal on the two-wire system circuit are separated by using the principle of unidirectional conductivity of the diode. When the current direction of the circuit is W → ground, the two-wire system circuit transmits the second voltage signal transmitting the electric power, and the second voltage signal is transmitted to the power conversion module; and when the current direction of the circuit is C → ground, the two-wire system circuit transmits the first voltage signal transmitting data, and the first voltage signal is transmitted to the slave detection module.

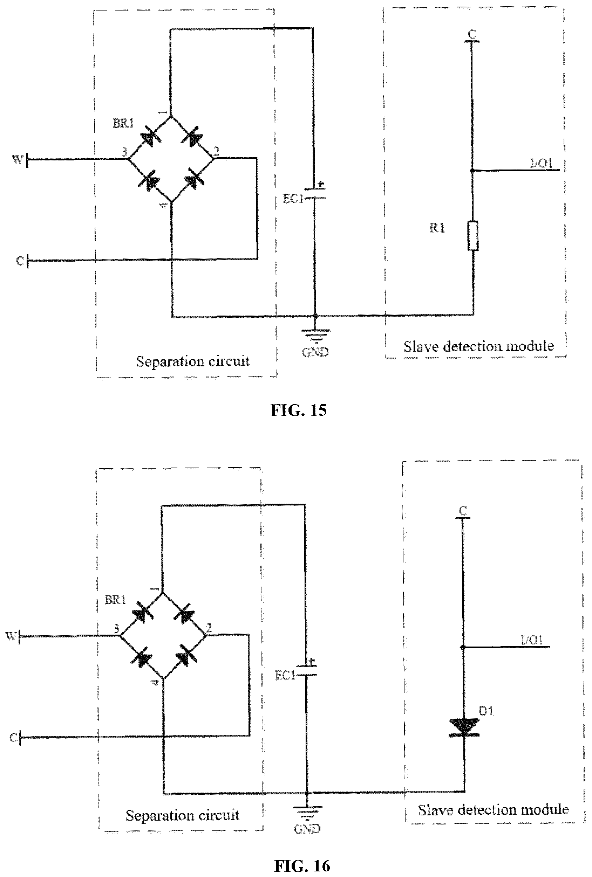

The circuit principle diagram of the separation circuit and the slave detection module at this time can be shown in FIG. 15, FIG. 16, FIG. 17, and FIG. 18.

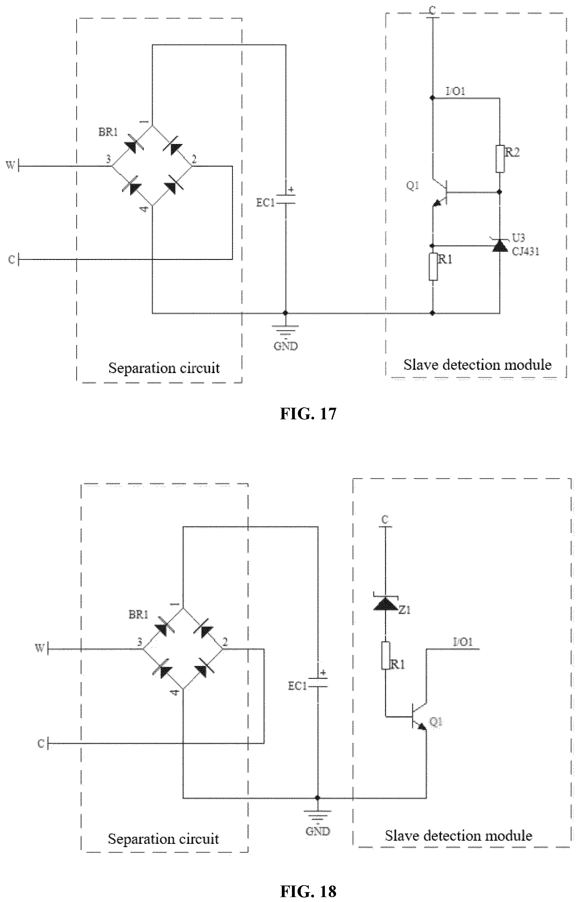

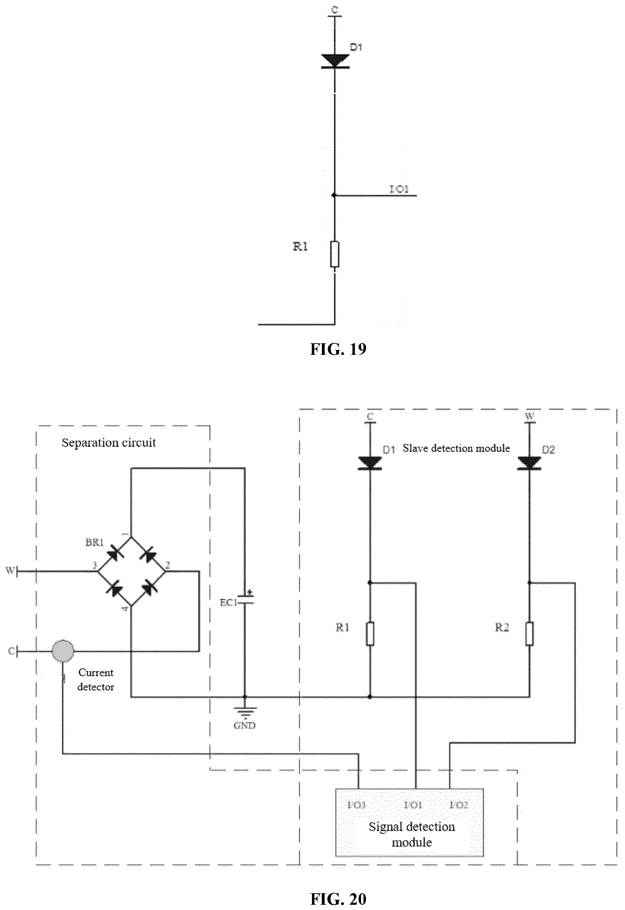

The slave detection module in FIG. 15 utilizes a resistance to detect the voltage of the signal line C. The slave detection module in FIG. 16 utilizes a constant-current diode or constant-current chip to detect the voltage of the signal line C. The slave detection module in FIG. 17 utilizes a 431 voltage regulator circuit to detect the voltage of the signal line C. The slave detection module in FIG. 18 utilizes a voltage threshold detection circuit to detect the voltage of the signal line C. It should be noted that the energy storage component EC1 in FIG. 15, FIG. 16, FIG. 17, and FIG. 18 can be omitted. Additionally, in order to prevent the ports OUT1 and OUT2 of the host end from being connected mistakenly to the IN 1 and IN2 of the slave end, a diode can be added to the input end of the signal line on the slave detection module, that is, a diode can be added to one side of the signal line C in the detection circuit to prevent the power supply voltage signal from being too large and burning the devices. For ease of understanding, taking the slave detection module in FIG. 15 as an example, the schematic diagram of adding the diode is shown in FIG. 19. The principle of adding the diode to the slave detection module in FIG. 16, FIG. 17, and FIG. 18 is similar to the principle of adding the diode to the slave detection module in FIG. 15, and will not be illustrated in separate drawings.

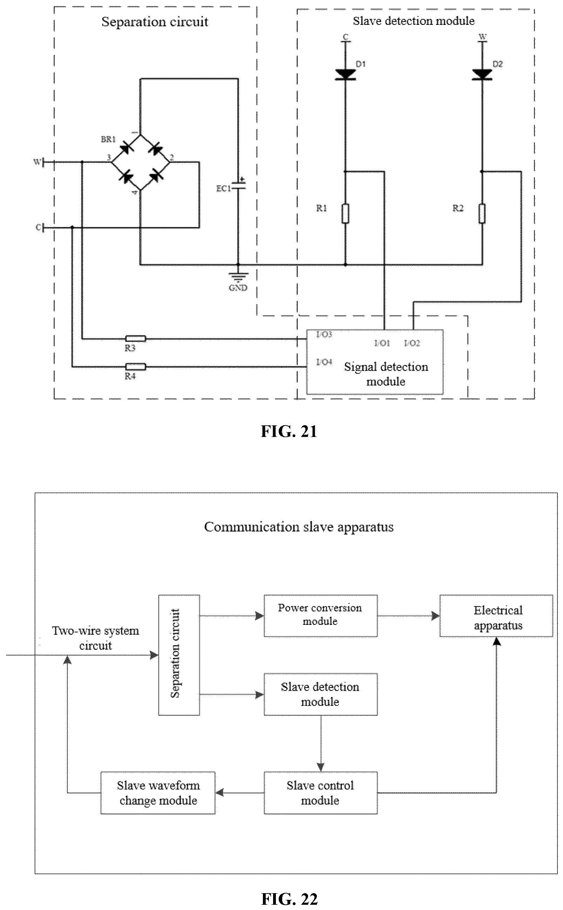

When it does not know the two-wire system connection method between the host end and the slave end, i.e., it does not know the connection method between the ports IN1 and IN2 of the slave end and the ports OUT1 and OUT2 of the host end, i.e., whether IN1 connects to OUT1 and IN2 connects to OUT2, or IN1 connects to OUT2 and IN2 connects to OUT1. Therefore, the slave end cannot determine when is used to transmit the first voltage signal transmitting data, i.e., it cannot determine which is the signal line, so that the first voltage signal is required to be separated from the voltage signals of the two-wire system circuits. The circuit principle diagram of the separation circuit and the slave detection module can be shown in FIG. 20, and FIG. 21.

In FIG. 20, the current size and current direction of line C are detected by IO3. If the current is smaller than a preset threshold, it is indicated that the first voltage signal transmitting data is transmitted, wherein if the current direction is W→C, the line W is the signal line; and the voltage on the line W is detected by the port IO2 at this time, and then the valid communication data is analyzed according to the detected voltage value; and if the current direction is C→W at this time, the line C is the signal line; and the voltage on the line C is detected by the port IO1, and then the valid communication data is analyzed according to the detected voltage value. At this time, the separation circuit includes a signal detection module and a current detector besides four diodes. The current detector is used to detect the current size and current direction on the line C, and transmit them to the signal detection module. The separation circuit and the slave detection module reuse the same signal detection module. The signal detection module is used to determine which line is the signal line according to the detected current size and current direction on the line C, and detect the voltage on the signal line by the corresponding port IO.

In FIG. 21, it is to determine which line is the signal line by detecting the voltage sizes and the voltage difference between line C and line W. If the voltage difference is small, it means that the first voltage signal transmitting data is transmitted, wherein if the voltage of the line W is larger than the voltage of the line C, the current direction is W -> C, and the line W is the signal line; the voltage on the line W is detected by the port IO2 at this time, and then the valid communication data is analyzed according to the detected voltage value; and if the voltage of the line C is larger than the voltage of the line W, the current direction is C → W, and the line C is the signal line; and the voltage on the line C is detected by the port IO1, and then the valid communication data is analyzed according to the detected voltage value. The separation circuit includes the signal detection module and a resistance R3 and resistance R4 besides four diodes. The separation circuit and the slave detection module reuse the same signal detection module. The signal detection module is used to determine which line is the signal line according to the voltage sizes and the voltage difference on the line C and line W, and detect the voltage on the signal line by the corresponding port IO.

It should be noted that, as shown in FIG. 15-FIG. 18, and FIG. 20-FIG. 21, the separation circuit can further include a capacitor component EC1. When the two-wire system circuit transmits the first voltage signal, the voltage of two ends of the capacitor component EC1 is larger than the first voltage signal, at which time the first voltage signal is isolated before the separation circuit. Therefore, the capacitor component EC1 plays a role of separation, not storing energy.

It should be noted that the energy storage component in the slave end is not necessary. In order to adapt to the power requirement of the electrical apparatus, the subsequent power conversion module is basically provided with the capacitor (the electric heating wire, heat preservation lamp, or other electrical apparatus with heating function does not require that), so that the energy storage component may not be required, that is, the energy storage component EC1 included in FIG. 15-FIG. 18, and FIG. 20-FIG. 21 above cannot be understood as a limitation of the present invention.

When the two-wire system connection method between the host end and the slave end is not known, the slave detection module can also be adopted as a high/low voltage conduction circuit, so as to realize the detection of valid communication data. The circuit diagram of the high/low voltage conduction circuit is well known in the art, and will not be described herein.

The slave detection module can be realized in multiple ways. The slave detection module is realized in different ways in cases that it is known which line is the signal line and in cases that it is unknown which line is the signal line.

Since the output port of the first voltage signal at the host end is known, the host detection module does not need to perform the signal separation detection. Therefore, the host detection module is realized in the same method as the slave detection module foregoing when the two-wire system connection method between the host end and the slave end is known, and the specific implementation of the host detection module is not described herein.

In an optional embodiment, the slave end further includes the power conversion module and/or the slave waveform change module, as shown in FIG. 22. If the slave end only serves as the data receiving end, i.e., if the slave end does not send data, the waveform change module cannot be included at this time. Therefore, the schematic structure shown in FIG. 22 cannot be understood as a limitation of the present invention.

The separation circuit is connected to the electrical apparatus by the power conversion module, and the power conversion module is configured to improve or reduce the voltage of the voltage signal on the two-wire system circuit, so as to adapt to the power requirement of the electrical apparatus. The power conversion module can include a transformer, wherein the transformer can be a step-down transformer or a step-up transformer, which can be selected according to the voltage required by the electrical apparatus.

The slave waveform change module is configured to connect to the two-wire system circuit and the slave control module. When the two-wire system circuit is used to transmit data, the slave waveform change module is configured to change the voltage waveform of the first voltage signal under the control of the slave control module to transmit the uplink communication data. The slave control module is further configured to control the slave waveform change module to change the voltage waveform of the first voltage signal to transmit the uplink communication data according to code information corresponding to the uplink communication data at this time.

It is to be noted that when the slave end further includes the slave waveform change module, accordingly, the host end is further configured to detect the size of the first voltage signal; decode the uplink communication data sent from the slave end according to the size of the detected first voltage signal; and execute the corresponding instructions according to the uplink communication data, so as to communicate with the slave end. The host end further includes the host detection module at this time.

The implementation of the slave waveform change module is consistent with the implementation of the host waveform change module described above, and will not be described herein.

Additionally, when the two-wire system power supply communication system includes at least 2 slave ends, the slave ends are further configured to send the downlink communication data and receive the uplink communication data with other slave ends by the two-wire system circuit. Accordingly, the other slave ends are configured to receive the downlink data sent by the slave end via the two-wire system circuit and send the uplink communication data, so that the slave end can communicate with the other slave ends.

Based on the same inventive concept, the embodiments of the present invention further provide the communication information sending method, wherein the method includes steps S1 and S2. S1: transmitting the first voltage signal and the second voltage signal in different time and directions on the two-wire system circuit, wherein the first voltage signal is configured to transmit the communication data, and the second voltage signal is configured to transmit the electric power. S2: transmitting the communication data by the communication party by changing the voltage waveform of the first voltage signal when transmitting the communication data. The first voltage signal and the second voltage signal are voltage signals in different directions, and the first voltage signal and the second voltage signal alternate according to the preset time period.

The communication information sending method can be applied to the host end or the communication host apparatus described above.

The communication information sending method provided by the embodiments of the present invention has the same realization principle and the resulting technical effect as the foregoing communication host apparatus in the embodiments. For a brief description, what is not mentioned in the method embodiments section, reference can be made to the corresponding contents in the foregoing embodiments of the communication host apparatus.

It should be noted that each embodiment in the specification is described in a progressive manner. Each embodiment focuses on the differences with other embodiments, and the same similar parts between the various embodiments can be referred to each other.

The above mentioned are only specific embodiments of the present invention, but the scope of protection of the present invention is not limited thereto. Any person skilled in the art familiar with the technical field, can easily think of variations or substitutions within the scope of the technology disclosed in the present invention, shall be covered by the scope of protection of the present invention. Therefore, the scope of protection of the present invention shall be governed by the scope of protection of the claims.

### Industrial Applicability

The present invention provides a communication information sending method, a communication host apparatus, and a two-wire system power supply communication system, and belongs to the technical field of communications. The method includes: transmitting the first voltage signal and the second voltage signal in different time and directions on the two-wire system circuit, wherein the first voltage signal is configured to transmit the communication data, and the second voltage signal is configured to transmit the electric power. When transmitting the communication data, the communication data is transmitted by changing the waveform of the first voltage signal on the two-wire system circuit, wherein the first voltage signal and the second voltage signal are voltage signals in different directions, and the first voltage signal and the second voltage signal alternate according to the preset time period. The first voltage signal and the second voltage signal on the two-wire system are transmitted independently and without interfering with each other, so that the method has advantages of simple operation, simplified wiring, strong power supply capacity, strong anti-interference ability, and strong communication reliability, etc.

Additionally, it is to be understood that the communication information sending method, the communication host apparatus, and the two-wire system power supply communication system of the present invention are reproducible, and can be used in multiple industrial applications. For example, the communication information sending method, the communication host apparatus, and the two-wire system power supply communication system of the present invention can be used in the communication technology where needs to realize the power supply communication.

## Claims

1. A communication information sending method, **characterized by** comprising:
transmitting a first voltage signal and a second voltage signal in different time and directions on a two-wire system circuit, wherein the first voltage signal is configured to transmit communication data, and the second voltage signal is configured to transmit electric power, wherein
when transmitting the communication data, a communication party transmits the communication data by changing a waveform of the first voltage signal, wherein
the first voltage signal and the second voltage signal are voltage signals in different directions, and the first voltage signal and the second voltage signal alternate according to a preset time period.

2. The communication information sending method according to claim 1, wherein the communication information sending method is executed by a communication host apparatus, wherein the communication host apparatus is configured to generate the first voltage signal and the second voltage signal.

3. The communication information sending method according to claim 1 or 2, wherein when transmitting downlink communication data, the communication party transmits the downlink communication data by changing the waveform of the first voltage signal according to a code corresponding to the downlink communication data.

4. A communication host apparatus, **characterized by** comprising:
a host module, configured to connect to a two-wire system circuit, wherein the host module is configured to generate a first voltage signal transmitting communication data and a second voltage signal transmitting electric power, wherein the first voltage signal and the second voltage signal are voltage signals in different directions, and the first voltage signal and the second voltage signal alternate according to a preset time period;
a host waveform change module, configured to connect to the host module, wherein when the two-wire system circuit is configured to send downlink communication data, the host waveform change module is configured to transmit the downlink communication data by changing waveform of the first voltage signal; and
a host control module, connected to the host waveform change module, wherein the host control module is configured to control the host waveform change module to change the waveform of the first voltage signal to transmit the downlink communication data according to code information corresponding to the downlink communication data.

5. The communication host apparatus according to claim 4, wherein the first voltage signal and the second voltage signal are both DC signals.

6. The communication host apparatus according to claim 4 or 5, wherein the host waveform change module comprises at least two components capable of circuit switching and voltage regulation branches corresponding to the components.

7. The communication host apparatus according to any one of claims 4 to 6, wherein the host module comprises:
a first power source, configured to generate the first voltage signal transmitting the communication data;
a second power source, configured to generate the second voltage signal transmitting the electric power; and
a voltage signal switching module, configured to switch the first power source and the second power source under control of the host control module, so that the first voltage signal and the second voltage signal in the different directions alternate according to the preset time period.

8. The communication host apparatus according to any one of claims 4 to 7, further comprising: a host detection module, wherein the host detection module is connected to the host control module; the host detection module is configured to detect the waveform of the first voltage signal, and transmit detection data to the host control module; and
the host control module is further configured to decode uplink communication data sent by a communication slave apparatus according to the detection data detected by the host detection module, so as to communicate with the communication slave apparatus.

9. A two-wire system power supply communication system, **characterized by** comprising: a host end and a slave end, wherein the host end is connected to the slave end by a two-wire system circuit, wherein
the host end comprises a communication host apparatus, and the host end is configured to generate a first voltage signal required for transmitting communication data and a second voltage signal transmitting electric power, wherein the first voltage signal and the second voltage signal are voltage signals in different directions, and the first voltage signal and the second voltage signal alternate according to a preset time period, wherein
when transmitting downlink communication data, the host end transmits the downlink communication data by changing waveform of the first voltage signal according to a code corresponding to the downlink communication data; and
the slave end comprises at least one communication slave apparatus, wherein the slave end is configured to acquire the second voltage signal and supply power to an electrical apparatus, and receive and decode the downlink communication data on the first voltage signal when the two-wire system circuit transmits the first voltage signal, so as to communicate with the host end.

10. The two-wire system power supply communication system according to claim 9, wherein the host end comprises:
a host module, configured to connect to the two-wire system circuit, wherein the host module is configured to generate the first voltage signal transmitting the communication data and the second voltage signal transmitting the electric power, wherein the first voltage signal and the second voltage signal are the voltage signals in the different directions, and the first voltage signal and the second voltage signal alternate according to the preset time period;
a host waveform change module, configured to connect to the host module, wherein when the two-wire system circuit is configured to send the downlink communication data, the host waveform change module is configured to transmit the downlink communication data by changing the waveform of the first voltage signal; and
a host control module, connected to the host waveform change module, wherein the host control module is configured to control the host waveform change module to change the waveform of the first voltage signal to transmit the downlink communication data according to code information corresponding to the downlink communication data.

11. The two-wire system power supply communication system according to claim 10, wherein the host waveform change module comprises at least two components capable of circuit switching and voltage regulation branches corresponding to the components.

12. The two-wire system power supply communication system according to claim 10 or 11, wherein the host module comprises:
a first power source, configured to generate the first voltage signal transmitting the communication data;
a second power source, configured to generate the second voltage signal transmitting the electric power; and
a voltage signal switching module, configured to switch the first power source and the second power source under control of the host control module, so that the first voltage signal and the second voltage signal in the different directions alternate according to the preset time period.

13. The two-wire system power supply communication system according to any one of claims 9 to 12, wherein the slave end comprises:
a separation circuit, connected to the two-wire system circuit, wherein the separation circuit is configured to separate the first voltage signal from the second voltage signal;
a slave detection module, configured to detect the waveform of the first voltage signal, and output detection data; and
a slave control module, connected to the slave detection module, wherein the slave control module is configured to decode the downlink communication data sent by the host end according to the detection data detected by the slave detection module, so as to communicate with the host end.

14. The two-wire system power supply communication system according to claim 13, wherein the slave end further comprises:
a power conversion module, wherein the separation circuit is connected to the electrical apparatus by the power conversion module, and the power conversion module is configured to improve or reduce a voltage of a voltage signal on the two-wire system circuit, so as to adapt to a power requirement of the electrical apparatus.

15. The two-wire system power supply communication system according to claim 13 or 14, wherein the slave end further comprises:
a slave waveform change module, configured to connect to the two-wire system circuit, wherein the slave waveform change module is configured to send uplink communication data under control of the slave control module by changing the waveform of the first voltage signal, wherein
the slave control module is further configured to control the slave waveform change module to change the waveform of the first voltage signal to send the uplink communication data according to code information corresponding to the uplink communication data; and
accordingly, the host end further comprises:
a host detection module, connected to the host control module, wherein the host detection module is configured to detect the waveform of the first voltage signal, and transmit detection data to the host control module; and the host control module is configured to decode the uplink communication data sent by the slave end according to the detection data detected by the host detection module, so as to communicate with the slave end.

16. The two-wire system power supply communication system according to claim 15, wherein the slave end is further configured to send and receive communication data with other slave ends by the two-wire system circuit; and
the other slave ends are configured to send and receive communication data with the slave end by the two-wire system circuit, so as to communicate between slaves.
